# EUROPÄISCHE PATENTSCHRIFT

(11) **EP 2 428 680 B1**
(45) Veröffentlichungstag und Bekanntmachung des Hinweises auf die Patenterteilung: **19.07.2017**
(21) Anmeldenummer: 11177734.8
(22) Anmeldetag: 17.08.2011
(51) Int. Cl.: F04C 2/107, F04C 15/00, F16D 1/02

(54) **Exzenterschneckenpumpe**
Eccentric screw pump
Pompe à vis sans fin excentrique

(30) Priorität: 09.09.2010 DE 102010037440
(43) Veröffentlichungstag der Anmeldung: 14.03.2012
(73) Patentinhaber: Seepex GmbH, 46240 Bottrop (DE)
(72) Erfinder: Griesdorn, Marcel, 46238 Bottrop (DE); Overmeier, Dirk, 46119 Oberhausen (DE); Ryvkin, Vsevolod, 45147 Essen (DE)
(74) Vertreter: von dem Borne, Andreas

(56) Entgegenhaltungen:
- WO-A1-2009/024279
- DE-A1- 10 216 006
- DE-A1- 19 943 107
- US-A1- 2006 083 637

## Beschreibung

Die Erfindung betrifft eine Exzenterschneckenpumpe mit zumindest einem Stator und einem in dem Stator drehbar gelagerten Rotor, wobei an einem Ende des Stators ein Sauggehäuse und an dem gegenüberliegendem anderen Ende ein Anschlussstutzen angeordnet ist, wobei der Rotor innerhalb des Sauggehäuses über ein Kupplungsgelenk an eine Kupplungsstange oder Antriebswelle angeschlossen ist, wobei das Kupplungsgelenk aus einem antriebsseitigen, ersten Gelenkteil und einem gelenkig mit dem ersten Gelenkteil verbundenen, rotorseitigen zweiten Gelenkteil besteht, wobei der Rotor lösbar an das zweite Gelenkteil des Kupplungsgelenkes angeschlossen ist.

Der Stator ist üblicherweise aus einem elastischen Material gefertigt. Dabei kann der Stator von einem (starren) Statormantel aus z.B. Metall umgeben sein. Elastisches Material meint im Rahmen der Erfindung insbesondere ein Elastomer, z.B. einen (Synthese-) Kautschuk oder eine Kautschukmischung. Bevorzugt sind Statormantel und elastomerer Stator als separate Bauteile ausgebildet.

Die Statoren aus elastomeren Material unterliegen während des Betriebes einem Verschleiß, so dass in regelmäßigen Abständen Wartungsarbeiten bzw. ein Statoraustausch erforderlich ist. Um den zwischen Sauggehäuse einerseits und Anschlussstutzen andererseits montierten Stator auszutauschen, war es in der Praxis bislang erforderlich, Sauggehäuse und/oder Anschlussstutzen zu demontieren. Da eine Exzenterschneckenpumpe häufig in eine Anlage mit einer Vielzahl weiterer Bauteile integriert ist, ist eine solche Demontage in der Regel aufwendig. Ähnliches gilt für den Austausch des Rotors.

Um den Austausch des elastomeren Stators zu vereinfachen, wurde bereits vorgeschlagen, den Stator einer Exzenterschneckenpumpe als längs geteilten Stator aus zumindest zwei Stator-Teilschalen, z.B. zwei Halbschalen auszubilden. Auf diese Weise lässt sich der Stator aus elastomeren Material austauschen, ohne dass eine aufwendige Zerlegung der Pumpe notwendig ist (vgl. WO 2009/024 279 A1).

Alternativ wurde vorgeschlagen, zwischen Stator und Anschlussstutzen einen für die Demontage des Stators herausnehmbaren Distanzring anzuordnen, der bei montiertem Anschlussstutzen und montiertem Stator demontierbar und herausnehmbar ist, so dass anschließend nach Demontage des Distanzrings der Stator auf einfache Weise ausgewechselt werden kann, und zwar ohne dass das Sauggehäuse einerseits und der Anschlussstutzen andererseits demontiert werden müssen (vgl. DE 10 2008 021 919 A1). Auch bei dieser Ausführungsform kann der Statoraustausch erfolgen, ohne den Rotor zu demontieren.

Schließlich wurde alternativ bereits vorgeschlagen, das Sauggehäuse mit einem abnehmbaren Gehäusesegment auszurüsten, um so nach dem Entfernen des abnehmbaren Gehäusesegmentes die Verbindung zwischen dem Rotor und der Kupplungsstange zu lösen, so dass der Stator mit dem darin liegenden Rotor entfernt werden kann. Um diese Möglichkeit weiter zu vereinfachen, wurde vorgeschlagen, den Rotor lösbar an das zweite Gelenkteil des Kupplungsgelenkes anzuschließen. Eine derartige Exzenterschneckenpumpe der eingangs beschriebenen Art ist aus der DE 10 2008 021 919 A1 bekannt. Es wird eine Gelenktrennung zwischen dem zweiten Gelenkteil und dem Rotor realisiert, so dass das Kupplungsgelenk selbst nicht zerlegt werden muss. Das zweite Gelenkteil ist folglich nicht mehr integraler Bestandteil eines herkömmlichen Rotors, sondern ein selbstständiges Bauteil, welches lösbar mit dem eigentlichen Rotor bzw. dem Wendelabschnitt eines Rotors verbunden wird. Auf diese Weise soll insbesondere ein einfacher Statoraustausch realisierbar sein.

Aus der DE 199 43 107 A1 kennt man eine Exzenterschneckenpumpe für die Entleerung eines Silos, bei welcher die Pumpe in Kombination mit einem Schneckenförderer verwendet wird. Zu Wartungszwecken, z.B. für den Rotoraustausch und den Statoraustausch, muss die Exzenterschneckenpumpe von dem benachbarten Schneckenförderer getrennt werden. Dazu wird ein Schließelement zum Abschotten der Pumpe gegenüber dem Schneckenförderer beschrieben. Da dann die Trennung des Kupplungsgelenkes selbst nicht mehr möglich ist, wird vorgeschlagen, den Rotor über eine Zwischenwelle mit der Kupplungswelle zu verbinden, wobei die Zwischenwelle ein der Kupplungswelle zugewandtes Polygonprofil aufweist und wobei die Kupplungswelle an ihrem der Zwischenwelle zugewandten Endbereich mit einem komplementären Polygonprofil versehen ist, so dass die Zwischenwelle auf die Kupplungswelle aufsteckbar ist.

Eine ähnliche Ausführungsform ist aus der DE 20 2007 013 820 U1 bekannt, welche eine Exzenterschneckenpumpe für zähflüssige Medien beschreibt, bei welcher ebenfalls zusätzliche Förderelemente bzw. Behandlungselemente vorgesehen sind.

Der Erfindung liegt die Aufgabe zugrunde, eine Exzenterschneckenpumpe der eingangs beschriebenen Art zu schaffen, welche auf kostengünstige und montagetechnisch einfache Weise nicht nur einen Austausch des Stators, sondern insbesondere auch einen Austausch des Rotors ermöglicht.

Zur Lösung dieser Aufgabe lehrt die Erfindung eine Exzenterschneckenpumpe mit zumindest einem Stator und einem in dem Stator drehbar gelagerten Rotor, wobei an einem Ende des Stators ein Sauggehäuse und an dem gegenüberliegenden anderen Ende ein Anschlussstutzen angeordnet ist,
wobei der aus elastomerem Material bestehende Stator innerhalb eines Statormantels angeordnet und von diesem separat austauschbar ist, wobei der Stator als längsgeteilter Stator ausgebildet ist und zumindest zwei Stator-Teilschalen, z.B. Halbschalen, aufweist,
wobei der Rotor innerhalb des Sauggehäuses über ein Kupplungsgelenk an eine Kupplungsstange oder eine Antriebswelle angeschlossen ist, wobei das Kupplungsgelenk aus einem antriebsseitigen, ersten Gelenkteil und einem gelenkig mit dem ersten Gelenkteil verbundenen, rotorseitigen zweiten Gelenkteil besteht,
wobei der Rotor ohne Zerlegung des Kupplungsgelenkes lösbar an das zweite Gelenkteil des Kupplungsgelenkes angeschlossen ist, wobei das zweite Gelenkteil eine dem Rotor zugewandte und rotorseitig offene Rotoraufnahme aufweist, in welche das Rotorende in axialer Richtung unter Bildung einer drehfesten Verbindung einsteckbar ist oder umgekehrt das Rotorende eine gelenkseitig offene Aufnahme aufweist, in welche das Gelenkende des zweiten Gelenkteils in axialer Richtung einsteckbar ist,
wobei das Rotorende in axialer Richtung mit einem Sicherungselement in der Rotoraufnahme fixierbar ist oder das Gelenkende in axialer Richtung mit einem Sicherungselement in der Aufnahme des Rotorendes fixierbar ist.

Die Erfindung geht dabei zunächst einmal von der Erkenntnis aus, dass sich der Wartungsaufwand bei einer Exzenterschneckenpumpe erheblich verringern lässt, wenn sich der Rotor der Exzenterschneckenpumpe auf einfache Weise austauschen lässt, ohne dass das Sauggehäuse einerseits und der Anschlussstutzen andererseits demontiert werden müssen. Die Erfindung schließt folglich an Überlegungen an, den Statoraustausch bei einer Exzenterschneckenpumpe zu vereinfachen und erweitert die Möglichkeiten in Bezug auf den Rotoraustausch. Für diesen Rotoraustausch ist es nun jedoch nicht mehr erforderlich, einen Stator mit separatem Distanzring und/oder ein Sauggehäuse mit abnehmbarem Gehäusesegment zu verwenden. Vielmehr gelingt der Rotoraustausch im Rahmen der Erfindung auch bei herkömmlichen Gehäuseanordnungen. Denn trotz des in der Regel sehr engen Bauraums im Bereich des Sauggehäuses wird im Rahmen der Erfindung eine Gelenktrennung realisiert, bei welcher der trennbare Bereich gleichsam axial aus dem Sauggehäuse herausnehmbar ist. Auch bei dieser Ausführungsform ist es folglich nicht erforderlich, das Kupplungsgelenk selbst zu zerlegen, sondern es erfolgt eine Gelenktrennung zwischen dem zweiten Gelenkteil und dem Rotor. Diese Trennung bzw. Demontage kann jedoch ohne Zerlegung des Sauggehäuses durch die dem Stator zugewandte Öffnung des Sauggehäuses realisiert werden, nachdem der Stator demontiert wurde. Die Erfindung lässt sich folglich insbesondere bei solchen Ausführungsformen realisieren, bei denen ohne Demontage der Anlage der Stator austauschbar ist. Nachdem der Stator demontiert wurde, kann dann der Rotor demontiert und ausgetauscht werden, und zwar ohne Demontage des Sauggehäuses, da die zu demontierenden Elemente sämtlich in axialer Richtung zugänglich und folglich über die den Stator zugeordnete Öffnung des Sauggehäuses zugänglich sind.

Dabei bevorzugt wird das erfindungsgemäße Konzept bei solchen Exzenterschneckenpumpen realisiert, bei denen auf einfache Weise ein Statoraustausch ohne Demontage von Anschlussstutzen und Saugehäuse realisiert wird. Dabei greift die Erfindung beispielsweise auf solche Ausführungsformen zurück, die aus der WO 2009/024 279 A1 bekannt sind. Der Stator aus elastomerem Material ist folglich innerhalb eines Statormantels angeordnet und von diesem separat austauschbar. Das bedeutet, dass der austauschbare, elastomere Stator nicht an dem Statormantel befestigt ist, insbesondere nicht an diesen angeklebt oder anvulkanisiert ist, sondern ohne weiteres zum Zwecke des Austausches von diesem getrennt werden kann. Dabei ist der Stator als längsgeteilter Stator ausgebildet. Er besteht aus zumindest zwei Stator-Teilschalen, z.B. Halbschalen. In an sich bekannter Weise kann der Stator bzw. können die Teilschalen des Stators unter Zwischenschaltung eines oder mehrerer Adapterstücke an dem oder die Anschlussflansche von Sauggehäuse und/oder Druckstutzen angeschlossen sein. Weiter ist es vorteilhaft, wenn auch der Statormantel als längsgeteilter Mantel ausgebildet ist und zumindest zwei, vorzugsweise zumindest drei, z.B. vier oder mehr Mantelsegmente aufweist. Der Statormantel mit seinen Mantelsegmenten bildet dann eine Stator-Spannvorrichtung, mit welcher der Stator in radialer Richtung gegen den Rotor spannbar ist. An diese Technologie, die einen einfachen Statoraustausch ermöglicht, schließt die Erfindung an und schlägt nun zusätzlich die einfache Möglichkeit des Rotoraustauschs vor. Besonders vorteilhaft ist dabei die Tatsache, dass das erfindungsgemäße Prinzip kompatibel zu herkömmlichen Exzenterschneckenpumpen ist, denn das Sauggehäuse muss nicht modifiziert werden. Insbesondere ist keine Demontage des Sauggehäuses erforderlich und das Sauggehäuse muss auch kein abnehmbares Gehäusesegment aufweisen, da die Gelenktrennung - wie oben erläutert - über die Standardöffnung des Sauggehäuses in gleichsam axialer Richtung realisiert wird. Denn erfindungsgemäß weist das zweite Gelenkteil des Kupplungsgelenkes eine dem Rotor zugewandte und rotorseitig offene Rotoraufnahme auf, in welche das Rotorende in axialer Richtung unter Bildung einer drehfesten Verbindung eingesteckt wird.

Dazu ist in der Rotoraufnahme zumindest ein erstes Formschlusselement angeordnet und das Rotorende weist ein zweites Formschlusselement auf, so dass insgesamt durch Einstecken des Rotorendes in die Rotoraufnahme eine formschlüssige und folglich drehfeste Verbindung realisiert wird, wobei das Rotorende eben in axialer Richtung in die gleichsam topfartige Rotoraufnahme eingesteckt und dort in axialer Richtung gesichert wird. Die Rotoraufnahme kann auch selbst das Formschlusselement bilden.

Nach einer Ausführungsform greifen die Formschlusselemente unter Bildung einer klauenartigen Kupplung ineinander. Dieses lässt sich beispielsweise auf einfache und kostengünstige Weise dadurch realisieren, dass in der Rotoraufnahme als Formschlusselement ein Bolzen angeordnet ist und dass das Rotorende als Formschlusselement eine Gabelaufnahme aufweist, wobei der Bolzen im Zuge der Montage in die Gabelaufnahme unter Bildung einer klauenartigen Kupplung eingreift. Es liegt jedoch auch im Rahmen der Erfindung, dass umgekehrt das Rotorende einen Bolzen aufweist und dass die Rotoraufnahme eine Gabelaufnahme aufweist oder als Gabelaufnahme ausgebildet ist. Die Erfindung wurde bislang in erster Linie anhand der bevorzugten Ausführungsform erläutert, bei welcher das zweite Gelenkteil eine rotorseitig offene Rotoraufnahme aufweist, in welche das Rotorende in axialer Richtung unter Bildung einer drehfesten Verbindung einsteckbar ist. Alternativ besteht jedoch auch die Möglichkeit, dass nicht das Rotorende in eine offene Aufnahme des zweiten Gelenkteils eingesteckt wird, sondern dass umgekehrt das Rotorende eine offene Aufnahme aufweist, in welche das zweite Gelenkteil mit seinem Ende eingesteckt wird. Bei dieser Ausführungsform können ebenfalls in der beschriebenen Weise die beschriebenen Formschlusselemente unter Bildung einer klauenartigen Kupplung vorgesehen sein.

Die Erfindung umfasst auch abgewandelte Ausführungsformen, bei denen die Formschlusselemente keine klauenartige Kupplung bilden. So können die Formschlusselemente z.B. auch unter Bildung einer Polygonverbindung ineinandergreifen. Dieses lässt sich z.B. dadurch realisieren, dass das eine Formschlusselement als Vierkant bzw. Vierkantzapfen ausgebildet ist, welcher in eine korrespondierende Ausnehmung eingreift. Alternativ können die Zapfen und Ausnehmungen jedoch auch eine andere Gestalt aufweisen und z.B. mit Außen- und/oder Innenverzahnungen versehen sein. Im Wesentlichen kommt es dabei auf die drehfeste Verbindung mit Hilfe der Formschlusselemente an.

Alternativ können als Formschlusselemente am Rotorende ein oder mehrere exzentrisch angeordnete, axial vorkragende Zapfen und am zweiten Gelenkteil ein oder mehrere korrespondierende, exzentrisch angeordnete Ausnehmungen vorgesehen sein oder umgekehrt. Diese Vorsprünge und Ausnehmungen können selbst einen beliebigen Querschnitt aufweisen und z.B. auch zylindrisch ausgebildet sein, da die drehfeste Verbindung über die exzentrische Positionierung gewährleistet ist.

Um das Rotorende auf einfache Weise in axialer Richtung fixieren zu können, ist ein Sicherungselement vorgesehen, wobei das Rotorende mit diesem Sicherungselement in der Rotoraufnahme fixierbar ist. Das Sicherungselement ist z.B. als in radialer Richtung montierbares Sicherungsblech ausgebildet, welches im montierten Zustand eine Durchbrechung (z.B. einen Schlitz) der Rotoraufnahme bzw. deren Wand durchgreift und in eine außenumfangsseitige Ausnehmung (z.B. Nut) des Rotorendes eingreift. Auch wenn die Gelenktrennung und Gelenkverbindung folglich im Wesentlichen in axialer Richtung realisiert wird, so schließt dieses erfindungsgemäß nicht aus, dass das Sicherungselement zur Herstellung der Axialsicherung in radialer Richtung montiert wird. Das Sicherungselement kann jedoch als verhältnismäßig kleines Sicherungsblech ausgebildet sein, welches sich trotz des engen Bauraums auf einfache Weise in das Sauggehäuse einführen und dort an der gewünschten Stelle montieren lässt. Denn über dieses Sicherungselement muss nicht die drehfeste Verbindung hergestellt werden, sondern das Sicherungselement dient lediglich als Axialsicherung. Diese Ausführungsform wird weiter dadurch optimiert, dass das z.B. in radialer Richtung montierbare Sicherungselement mit einem in axialer Richtung auf die Rotoraufnahme aufschiebbaren Stützring gesichert wird. Dieser Stützring kann dann wiederum in axialer Richtung mit einem Arretierungsmittel, z.B. einem Sprengring oder dergleichen arretiert werden.

Die Ausgestaltung mit Sicherungselement, Stützring und/oder Arretierungsmittel bzw. Sprengring kann in identischer Weise auch bei den Ausführungsformen realisiert werden bei denen nicht das Rotorende in eine offene Aufnahme des zweiten Gelenkteils eingesteckt wird, sondern umgekehrt das zweite Gelenkteil in eine offene Aufnahme des Rotorendes. Dann weist vorzugsweise die Wand der Aufnahme des Rotorendes eine Durchbrechung auf, durch welche das Sicherungselement, z.B. Sicherungsblech, hindurch gesteckt wird, wobei dieses Sicherungselement dann in eine außen umfangsseitige Ausnehmung des Gelenkendes eingreift. Der Stützring wird dann folglich auf die Aufnahme des Rotorendes aufgeschoben.

Alternativ kann die Axialsicherung auch in anderer Weise realisiert werden. So besteht die Möglichkeit, dass das Rotorende eine (flanschartige) erste Sicherungsplatte und das zweite Gelenkteil eine (flanschartige) zweite Sicherungsplatte aufweist, welche in axialer Richtung durch eine aufschiebbare und drehbare Sicherungshülse miteinander verbunden werden. Diese Ausgestaltung bietet sich insbesondere bei den beschriebenen Ausführungsformen mit exzentrischen Formschlusselementen an. Dann ist es zweckmäßig, wenn die exzentrischen Formschlusselemente an der ersten Platte bzw. an der zweiten Platte angeordnet sind. Die erste Platte und die zweite Platte werden folglich im Zuge der Montage gegeneinander gedrückt, so dass die Zapfen in die Ausnehmungen eingreifen und so die drehfeste Verbindung realisieren. Die bereits aufgeschobene Sicherungshülse kann dann um einen vorgegebenen Winkel, z.B. um 45°, gedreht werden, so dass dann durch die Ausgestaltung der Hülse die Axialsicherung realisiert wird. Es liegt dabei im Rahmen der Erfindung, dass die Sicherungshülse dann gegen Verdrehen mit einem Arretierungsmittel arretiert wird.

Insgesamt kommt es im Rahmen der Erfindung auf die Möglichkeit der Gelenktrennung in Verbindung mit einer Axialsicherung an. Denn diese Axialsicherung ermöglichst es, dass die Pumpe trotz der Gelenktrennung in beiden Drehrichtungen betrieben werden kann.

Im Folgenden wird die Erfindung anhand einer lediglich ein Ausführungsbeispiel darstellenden Zeichnung näher erläutert. Es zeigen:
- Fig. 1: einen vereinfachten Längsschnitt durch eine erfindungsgemäße Exzenterschneckenpumpe,
- Fig. 2: den Gegenstand nach Fig. 1 in einer vereinfachten perspektivischen Darstellung bei abgenommenen Stator und
- Fig. 3: das Sicherungsblech des Gegenstandes nach Fig. 2,
- Fig. 4: eine abgewandelte Ausführungsform einer erfindungsgemäßen Exzenterschneckenpumpe (Ausschnitt),
- Fig. 5: das Rotorende des Gegenstandes nach Fig. 4,
- Fig. 6: das zweite Gelenkteil des Gegenstandes nach Fig. 4, und
- Fig. 7: die Sicherungshülse des Gegenstandes nach Fig. 4.

In den Figuren ist eine Exzenterschneckenpumpe dargestellt, welche in ihrem grundsätzlichen Aufbau einen Stator 1 aus einem elastischen Material und einem in dem Stator 1 gelagerten Rotor 2 aufweist, wobei der Stator 1 zumindest bereichsweise von einem Statormantel 3 umgeben ist. Der Stator 1 besteht aus einem elastomeren Material, während der Statormantel 3 in der Regel aus Metall besteht, wobei Stator 1 und Statormantel 3 als separate und folglich voneinander trennbare Bauteile ausgestaltet sind.

Ferner weist die Pumpe ein Sauggehäuse 4 sowie einen Anschlussstutzen 5 auf, welcher auch als Druckstutzen bezeichnet wird. Nicht dargestellt ist ein ebenfalls vorgesehener Antrieb, wobei der Antrieb über eine lediglich angedeutete Kupplungsstange 6 auf den Rotor 2 arbeitet. Die Kupplungsstange ist über Kupplungsgelenke einerseits an den Rotor 2 und andererseits an die nicht dargestellte Antriebswelle angeschlossen, wobei von den Kupplungsgelenken lediglich das rotorseitige Gelenk 7 dargestellt ist.

Der Stator 1 ist in an sich bekannter Weise mit seinem einen Ende an einem Anschlussflansch 9 des Sauggehäuses 4 mit seinem anderen Ende an einem Anschlussflansch 10 des Anschlussstutzens 5 angeschlossen. In der dargestellten Ausführungsform erfolgt der Anschluss nicht unmittelbar an diese Anschlussflansche 9, 10 sondern unter Zwischenschaltung jeweils eines Adapterstückes 11, 12. Diese Adapterstücke werden auch als Zentrierringe bezeichnet. Der Stator 1 ist im Ausführungsbeispiel als längsgeteilter Stator ausgebildet und besteht dazu aus zwei Stator-Teilschalen 1a, 1b. Die längsgeteilte Ausgestaltung des elastomeren Stators ermöglicht es, den Stator 1 bei montiertem Sauggehäuse 4, Druckstutzen 5 und Rotor 2 zu demontieren und zu montieren, da der Stator 1 eben nicht nach Entfernen des Druckstutzens von einer Seite auf den Rotor aufgeschoben werden muss. Der Statormantel 3 ist als längsgeteilter Mantel ausgebildet. Er weist dazu mehrere Mantelsegmente 13 auf, die eine Statorspannvorrichtung bzw. Statoreinstellvorrichtung bilden, mit welcher sich einerseits der längsgeteilte Stator 1 fixieren und abdichten lässt und andererseits eine gewünschte Spannung bzw. Vorspannung in den Stator 1 einbringen lässt. Im Einzelnen wird zur Ausgestaltung des längs geteilten Stators und des längs geteilten Mantels auf die Erläuterungen in der WO 2009/024 279 A1 verwiesen.

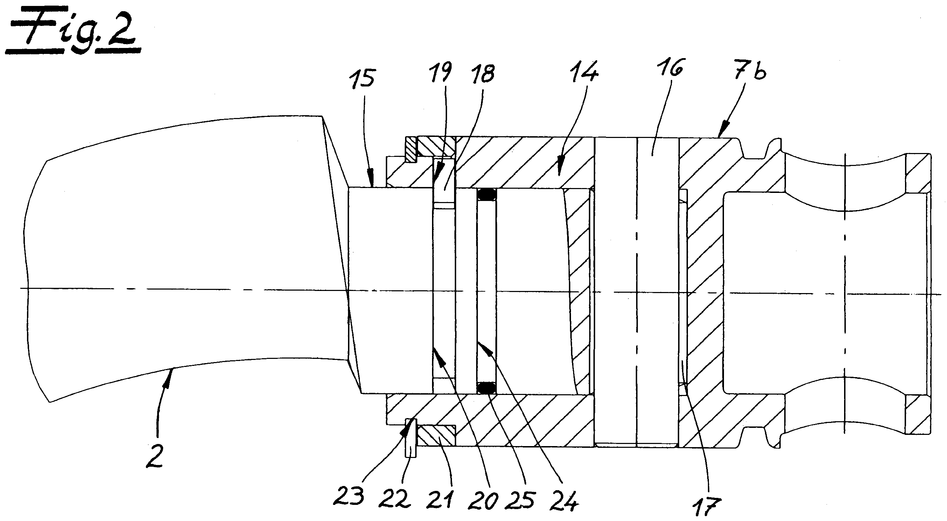

Erfindungsgemäß ist nun jedoch nicht nur der Stator 1 austauschbar, sondern insbesondere auch der Rotor 2. Dies ergibt sich insbesondere aus Fig. 2. Diese zeigt die Exzenterschneckenpumpe ausschnittsweise im Bereich des Kupplungsgelenkes 7 zwischen Rotor 2 einerseits und Kupplungsstange 6 andererseits. Dieses Kupplungsgelenk 7 besteht in an sich bekannter Weise aus einem Gelenkteil 7a und einem gelenkig mit dem ersten Gelenkteil 7a verbundenen, rotorseitigen zweiten Gelenkteil 7b. Der Rotor 2 ist nun lösbar an das zweite Gelenkteil 7b des Kupplungsgelenkes 7 angeschlossen. Diese Gelenktrennung wird im Ausführungsbeispiel dadurch realisiert, dass das zweite Gelenkteil 7b eine dem Rotor 2 zugewandte und rotorseitig offene Rotoraufnahme 14 aufweist. In diese Rotoraufnahme 14 ist das Rotorende 15 in axialer Richtung unter Bildung einer drehfesten Verbindung einsteckbar. Der Rotor 2 lässt sich folglich von dem Kupplungsgelenk 7 zum Zwecke des Rotoraustauschs trennen, ohne dass das Sauggehäuse 4 zerlegt oder in sonstiger Weise geöffnet werden muss. Dieses wird im Folgenden noch erläutert.

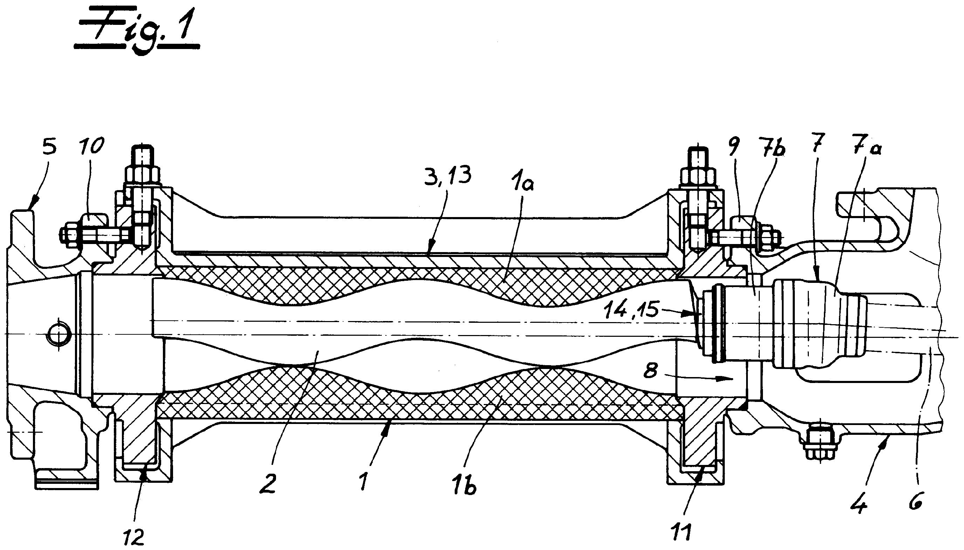

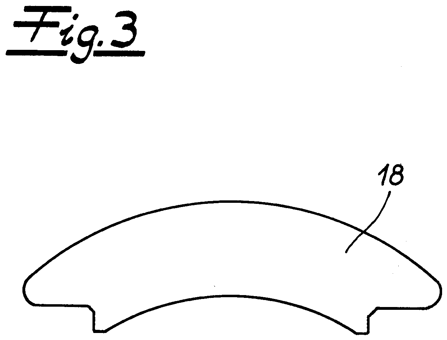

Im Ausführungsbeispiel nach den Fig. 1 bis 3 ist in der topfartigen Rotoraufnahme 14 ein erstes Formschlusselement 16 angeordnet, welches im Ausführungsbeispiel als Bolzen ausgebildet ist. An das Rotorende 15 ist ein zweites Formschlusselement 17 angeschlossen, welches im Ausführungsbeispiel als Gabelaufnahme 17 ausgebildet ist. Die Formschlusselemente 16, 17 greifen folglich unter Bildung einer klauenartigen Kupplung im Zuge der Montage ineinander, so dass eine drehfeste Verbindung zwischen Rotor 2 und Kupplungsgelenk 7 realisiert wird. Die Montage und Demontage des Rotorendes 15 in der Rotoraufnahme 14 erfolgt jedoch in im Wesentlichen axialer Richtung, denn das Rotorende 15 wird in axialer Richtung in die Rotoraufnahme 14 eingesteckt. Es ist lediglich erforderlich, dass Rotorende anschließend noch in axialer Richtung mit einem Sicherungselement 18 in der Rotoraufnahme zu fixieren. Dieses Sicherungselement 18 ist in Fig. 3 dargestellt. Es ist im Ausführungsbeispiel als Sicherungsblech 18 ausgebildet, welches im montierten Zustand eine Durchbrechung 19 der Rotoraufnahme 14 bzw. deren Wand durchgreift und in eine außenumfangsseitige Ausnehmung 20, nämlich eine Nut 20 des Rotorendes 15 eingreift. Auch wenn dieses Sicherungsblech 18 als Axialsicherung grundsätzlich in im Wesentlichen radialer Richtung in den Schlitz 19 bzw. die Nut 20 eingesteckt wird, so lässt sich diese Montage doch ohne Weiteres aus Richtung der dem Rotor 2 bzw. dem Stator 1 zugewandten Öffnung 8 des Sauggehäuses durchführen, so dass insgesamt ein Rotoraustausch bei montiertem Sauggehäuse möglich ist, und zwar nachdem der Stator 1 entfernt wurde.

Das Sicherungsblech 18 muss nicht die eigentliche drehfeste und formschlüssige Verbindung realisieren, es dient lediglich der Axialsicherung. Die eigentliche formschlüssige und drehfeste Verbindung erfolgt über das Zusammenwirken der Formschlusselemente 16, 17 und folglich des Bolzens 16 und der Gabelaufnahme 17. Zur Sicherung des Sicherungselementes 18 ist weiter ein in axialer Richtung auf die Rotoraufnahme 14 aufschiebbarer Stützring 21 vorgesehen, mit dem das Sicherungselement gesichert wird. Der Stützring 21 selbst kann dann wiederum in axialer Richtung mit einem Sprengring 22 oder dergleichen arretiert werden.

Im Rahmen der Erfindung wird folglich zum Zwecke des Rotoraustauschs zunächst der Stator 1 entfernt, ohne dass dabei Druckstutzen und/oder Sauggehäuse demontiert werden müssen, denn der Stator ist im Ausführungsbeispiel als längsgeteilter Stator ausgebildet. Nach Entfernen des Stators wird folglich die stirnseitige Öffnung 8 des Sauggehäuses 4 zugänglich. Über diese Öffnung 8 kann nun die Gelenktrennung in der beschriebenen Weise erfolgen, so dass dann der Rotor ausgetauscht werden kann. Für den Sprengring 22 ist außenseitig an die Rotoraufnahme 14 eine weitere außenumfangseitige Nut 23 eingebracht. Außerdem ist erkennbar, dass das Rotorende 15 neben der bereits erläuterten Nut 20 für das Sicherungsblech eine zusätzliche Nut 24 aufweist, in die beispielsweise ein Dichtungsring 25 eingesetzt sein kann.

In den Fig. 1 bis 3 ist lediglich ein bevorzugtes Ausführungsbeispiel dargestellt, bei welchem die topfartige Aufnahme an dem zweiten Gelenkteil 7b angeordnet ist, so dass das Rotorende 15 in diese offene Rotoraufnahme 14 eingesteckt wird.

Alternativ kann jedoch auch eine offene Aufnahme an dem Rotorende 15 vorgesehen sein, so dass das zweite Gelenkteil 7b dann mit seinem Ende in die offene Aufnahme des Rotorendes 15 einsteckbar ist. Eine solche Ausführungsform ist in den Figuren nicht dargestellt.

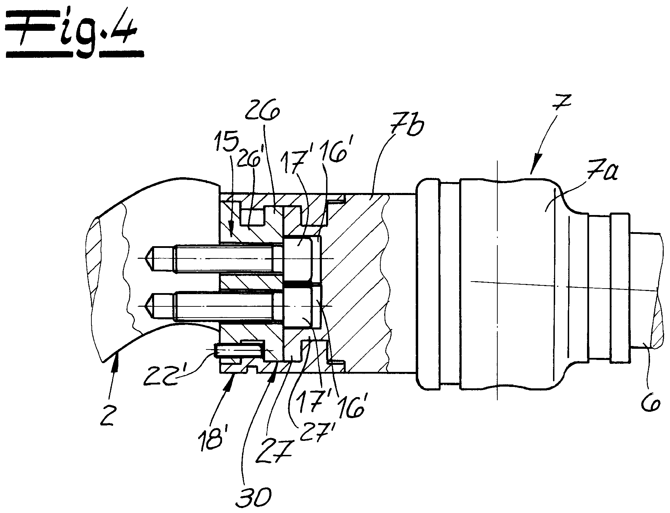

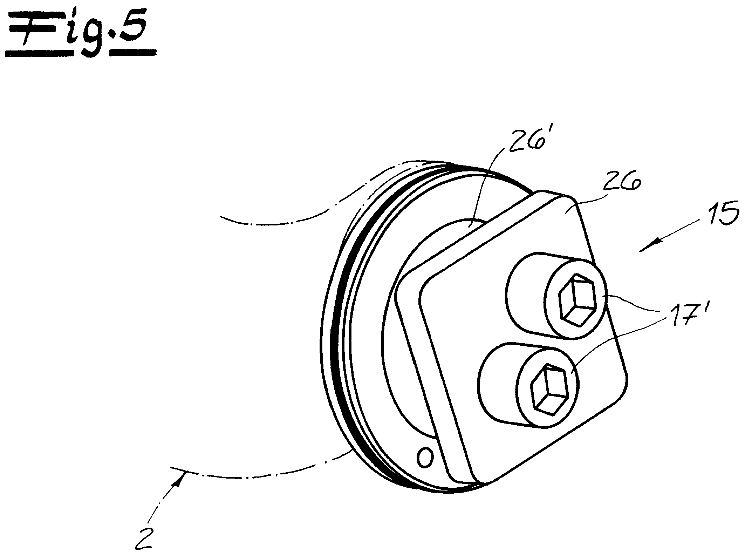

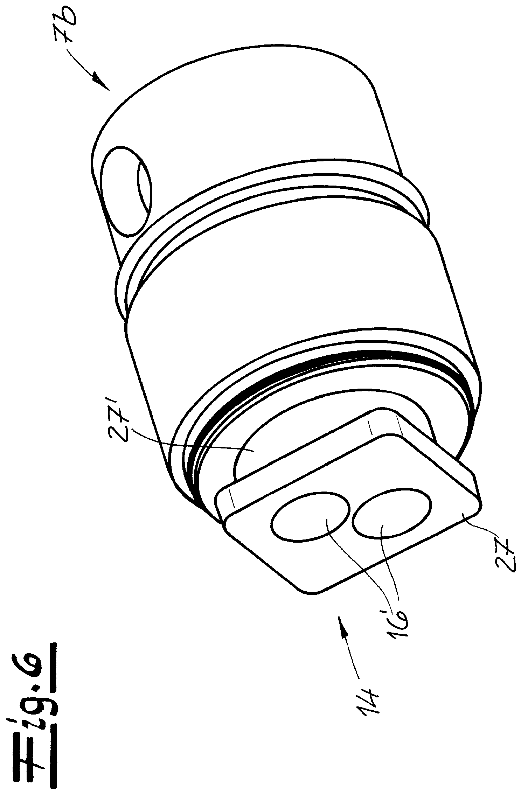

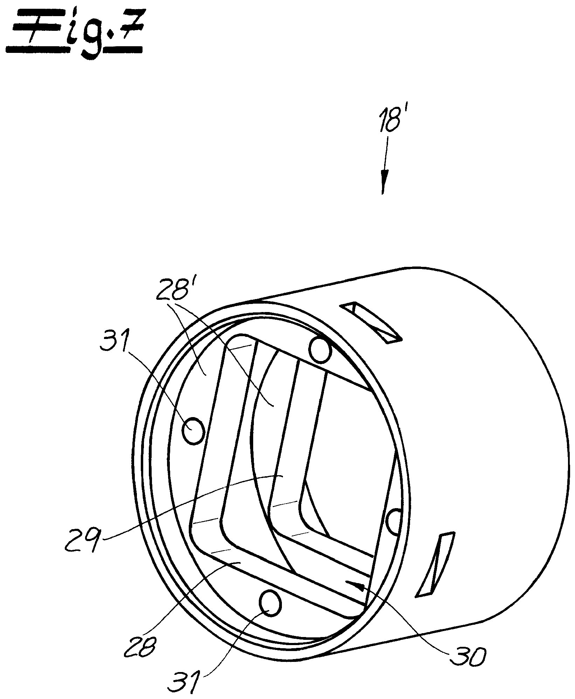

Eine abgewandelte Ausführungsform der Erfindung soll anhand der Fig. 4 bis 7 erläutert werden. Fig. 4 zeigt die Exzenterschneckenpumpe ausschnittsweise im Bereich der Gelenktrennung. Es ist der Rotor 2 bzw. das Rotorende 15 und das Kupplungsgelenk 7 mit insbesondere dem zweiten Gelenkteil 7b erkennbar. Auch hier ist eine lösbare, formschlüssige Verbindung zwischen Rotor 2 und zweitem Gelenkteil 7b realisiert. Als Formschlusselemente sind am Rotorende 15 zwei exzentrisch angeordnete, axial vorkragende Zapfen 17' vorgesehen und am zweiten Gelenkteil 7b zwei korrespondierende, exzentrisch angeordnete Ausnehmungen 16'. Um eine drehfeste Verbindung zu realisieren, greifen die Zapfen 17' im Zuge der Montage in die Ausnehmungen 16'. Ausnehmungen 16' und Zapfen 17' sind selbst zylindrisch ausgebildet. Die drehfeste Verbindung wird jedoch durch die exzentrische Positionierung realisiert. In dem dargestellten Ausführungsbeispiel gemäß Fig. 4 bis 7 sind am Rotorende eine flanschartige erste Platte 26 und am zweiten Gelenkteil eine flanschartige zweite Platte 27 vorgesehen. Die Ausnehmungen 16' und die Vorsprünge 17' sind an diesen flanschartigen Platten 26, 27 angeordnet. Die Platten 26, 27 sind durch durchmesserreduzierte Stege 26', 27' von dem Rotorende 15 bzw. dem Gelenkteil 7b beabstandet. Die Platten selbst haben einen von der Kreisform abweichenden Querschnitt, z.B. einen vieleckigen Querschnitt, im Ausführungsbeispiel einen rechteckigen oder quadratischen Querschnitt. Die Axialsicherung erfolgt dann über eine aufsteckbare und drehbare Sicherungshülse 18'. Diese Sicherungshülse 18' ist im Detail in Fig. 7 dargestellt und die Funktion dieser Sicherungshülse ergibt sich durch eine vergleichende Betrachtung der Fig. 4 bis 7. Es ist erkennbar, dass die Sicherungshülse 18' jeweils für die Platten 26, 27 korrespondierende Ausnehmungen 28 in Trennwänden 28' aufweist, durch welche die Platten 26, 27 hindurchführbar und zusammenfügbar sind. Die Trennwände 28' sind durch einen Zwischenraum 30 beabstandet, so dass die Platten 26, 27 im montierten Zustand in den Zwischenraum 30 eingreifen. Durch Drehung der Hülse um z.B. 45° lassen sich dann die Platten 26, 27 in axialer Richtung miteinander fixieren. Diese Drehung kann durch ein zusätzliches Arretierungsmittel 22' fixiert werden, welches durch an der Hülse vorgesehene Ausnehmungen 31 hindurchführbar ist. Insgesamt wird im Rahmen diese Ausführungsbeispiels eine Schnellwechselkupplung realisiert.

Dabei liegt es im Rahmen der Erfindung, die in den Figuren dargestellten Platten 26, 27 einstückig mit Rotor bzw. Gelenkteil zu fertigen. Besonders bevorzugt ist jedoch zumindest die Platte 26 als gleichsam Adapterstück mit dem daran angeschlossenen Stutzen lösbar mit dem Rotor 2 verbunden. Dieses ist in Fig. 4 erkennbar.

## Patentansprüche

1. Exzenterschneckenpumpe mit zumindest einem Stator (1) und einem in dem Stator (1) drehbar gelagerten Rotor (2), wobei an einem Ende des Stators (1) ein Sauggehäuse (4) und an dem gegenüberliegenden anderen Ende ein Anschlussstutzen (5) angeordnet ist,
der aus elastomerem Material bestehende Stator (1) innerhalb eines Statormantels (3) angeordnet ist und von diesem separat austauschbar ist, wobei
der Stator (1) als längsgeteilter Stator ausgebildet ist und zumindest zwei Stator-Teilschalen (1a, 1b), z.B. Halbschalen, aufweist,
wobei der Rotor innerhalb des Sauggehäuses (4) über ein Kupplungsgelenk (7) an eine Kupplungsstange (6) oder eine Antriebswelle angeschlossen ist, wobei das Kupplungsgelenk (7) aus einem antriebsseitigen, ersten Gelenkteil (7a) und einem gelenkig mit dem ersten Gelenkteil (7a) verbundenen, rotorseitigen zweiten Gelenkteil (7b) besteht,
**dadurch gekennzeichnet, dass** der Rotor (2) ohne Zerlegung des Kupplungsgelenkes lösbar an das zweite Gelenkteil (7b) des Kupplungsgelenkes (7) angeschlossen ist,
wobei das zweite Gelenkteil (7b) zumindest eine dem Rotor zugewandte und rotorseitig offene Rotoraufnahme (14) aufweist, in welche das Rotorende (15) in axialer Richtung unter Bildung einer drehfesten Verbindung einsteckbar ist oder umgekehrt das Rotorende (15) eine gelenkseitig offene Aufnahme aufweist, in welche das Gelenkende des zweiten Gelenkteils (7b) in axialer Richtung einsteckbar ist,
wobei das Rotorende (15) in axialer Richtung mit einem Sicherungselement (18) in der Rotoraufnahme (14) fixierbar ist oder dass das Gelenkende in axialer Richtung mit einem Sicherungselement (18, 18') in der Aufnahme des Rotorendes fixierbar ist.

2. Exzenterschneckenpumpe nach Anspruch 1, **dadurch gekennzeichnet, dass** in der Rotoraufnahme (14) des zweiten Gelenkteils (7b) oder in der Aufnahme des Rotorendes (15) zumindest ein erstes Formschlusselement (16, 16') angeordnet ist und dass das Rotorende (15) oder das Gelenkende des zweiten Gelenkteils (7b) zumindest ein zweites Formschlusselement (17, 17') aufweist.

3. Exzenterschneckenpumpe nach Anspruch 2, **dadurch gekennzeichnet, dass** die Formschlusselemente (16, 17) unter Bildung einer klauenartigen Kupplung ineinander greifen.

4. Exzenterschneckenpumpe nach Anspruch 3, **dadurch gekennzeichnet, dass** in der Rotoraufnahme (14) des zweiten Gelenkteils (7b) oder in der Aufnahme des Rotorendes (15) als Formschlusselement (16) ein Bolzen (16) angeordnet ist und dass das Rotorende (15) oder das Gelenkende als Formschlusselement (17) eine Gabelaufnahme (17) aufweist, wobei der Bolzen (16) im Zuge der Montage in die Gabelaufnahme (17) unter Bildung einer klauenartigen Kupplung eingreift.

5. Exzenterschneckenpumpe nach Anspruch 2, **dadurch gekennzeichnet, dass** die Formschlusselemente unter Bildung einer Polygonverbindung ineinandergreifen.

6. Exzenterschneckenpumpe nach Anspruch 2, **dadurch gekennzeichnet, dass** als Formschlusselemente am Rotorende (15) ein oder mehrere exzentrisch angeordnete, axial vorkragende Zapfen (17') und am zweiten Gelenkteil (7b) ein oder mehrere korrespondierende, exzentrisch angeordnete Ausnehmungen (16') vorgesehen sind oder umgekehrt.

7. Exzenterschneckenpumpe nach einem der Ansprüche 1 bis 6, **dadurch gekennzeichnet, dass** das Sicherungselement (18) als in radialer Richtung montierbares Sicherungsblech (18) ausgebildet ist, welches in montiertem Zustand eine Durchbrechung (19) der Rotoraufnahme (14) bzw. deren Wand durchgreift und in eine außenumfangsseitige Ausnehmung (20) des Rotorendes eingreift.

8. Exzenterschneckenpumpe nach Anspruch 6 oder 7, **dadurch gekennzeichnet, dass** das z. B. in radialer Richtung montierbare Sicherungselement (18) mit einem in axialer Richtung auf die Rotoraufnahme (14) aufschiebbaren Stützring (21) gesichert ist.

9. Exzenterschneckenpumpe nach Anspruch 8, **dadurch gekennzeichnet, dass** der Stützring (21) in axialer Richtung mit einem Arretierungsmittel (22), z. B. einem Sprengring oder dergleichen arretiert wird.

10. Exzenterschneckenpumpe nach einem der Ansprüche 1 bis 6, **dadurch gekennzeichnet, dass** für die Axialsicherung das Rotorende (15) eine erste Sicherungsplatte (26) und das zweite Gelenkteil (7b) eine zweite Sicherungsplatte (27) aufweist, welche in axialer Richtung durch eine drehbare Sicherungshülse (18') miteinander verbunden werden.

11. Exzenterschneckenpumpe nach Anspruch 10, **dadurch gekennzeichnet, dass** die exzentrischen Zapfen (17') und die exzentrischen Ausnehmungen (16') an den Sicherungsplatten (26, 27) angeordnet sind.

12. Exzenterschneckenpumpe nach Anspruch 10 oder 11, **dadurch gekennzeichnet, dass** die Sicherungshülse (18') gegen Verdrehen mit einem Arretierungsmittel (22') arretiert wird.

13. Exzenterschneckenpumpe nach einem der Ansprüche 1 bis 12, **dadurch gekennzeichnet, dass** der Statormantel (3) als längsgeteilter Mantel ausgebildet ist und zumindest zwei, vorzugsweise zumindest drei, z.B. zumindest vier, gegeneinander verspannbare Mantelsegmente (13) aufweist, wobei der Statormantel (3) mit seinen Mantelsegmenten (13) vorzugsweise eine Stator-Spannvorrichtung bildet, mit der Stator (1) in radialer Richtung gegen den Rotor (2) spannbar ist.

## Claims

1. An eccentric screw pump with at least a stator (1) and a rotor (2) that is rotatably mounted in the stator (1), wherein a suction housing (4) is arranged on one end of the stator (1) and a connecting piece (5) is arranged on the other opposite end,
wherein the stator (1) consisting of elastomeric material is arranged within a stator casing (3) and can be exchanged separately thereof,
wherein the stator (1) is realized in the form of a longitudinally divided stator and features at least two partial stator shells (1a, 1b), e.g. half-shells,
wherein the rotor is connected to a coupling rod (6) or a driveshaft by means of a coupling joint (7) within the suction housing (4), and wherein the coupling joint (7) consists of a first joint part (7a) on the drive side and a second joint part (7b) on the rotor side, which is connected to the first joint part (7a) in an articulated fashion,
**characterized in that** the connection between the rotor (2) and the second joint part (7b) of the coupling joint (7) can be separated without having to disassemble the coupling joint,
wherein the second joint part (7b) features at least a rotor receptacle (14) facing the rotor, which is open on the rotor side and into which the rotor end (15) can be axially inserted in order to produce a rotationally rigid connection, or the rotor end (15) conversely features a receptacle that is open on the joint side and into which the joint end of the second joint part (7b) can be axially inserted, and
wherein the rotor end (15) can be axially fixed in the rotor receptacle (14) with a securing element (18) or the joint end can be axially fixed in the receptacle of the rotor end with a securing element (18, 18').

2. The eccentric screw pump according to claim 1, **characterized in that** at least one first form-fitting element (16, 16') is arranged in the rotor receptacle (14) of the second joint part (7b) or in the receptacle of the rotor end (15), and **in that** the rotor end (15) or the joint end of the second joint part (7b) features at least one second form-fitting element (17, 17').

3. The eccentric screw pump according to claim 2, **characterized in that** the form-fitting elements (16, 17) engage into one another such that a claw-like coupling is produced.

4. The eccentric screw pump according to claim 3, **characterized in that** a form-fitting element (16) in the form of a bolt (16) is arranged in the rotor receptacle (14) of the second joint part (7b) or in the receptacle of the rotor end (15), and **in that** the rotor end (15) or the joint end features a form-fitting element (17) in the form of a fork receptacle (17), wherein the bolt (16) engages into the fork receptacle (17) during the course of the assembly such that a claw-like coupling is produced.

5. The eccentric screw pump according to claim 2, **characterized in that** the form-fitting elements engage into one another such that a polygonal connection is produced.

6. The eccentric screw pump according to claim 2, **characterized in that** the form-fitting elements are realized in the form of one or more eccentrically arranged and axially projecting pins (17') on the rotor end (15), as well as in the form of one or more corresponding and eccentrically arranged recesses (16') on the second joint part (7b) or vice versa.

7. The eccentric screw pump according to one of claims 1-6, **characterized in that** the securing element (18) is realized in the form of a securing plate (18), which can be installed in the radial direction, wherein said securing plate extends through an opening (19) of the rotor receptacle (14) or its wall and engages into a recess (20) on the outer circumference of the rotor end in the installed state.

8. The eccentric screw pump according to claim 6 or 7, **characterized in that** the securing element (18), which can be installed, e.g., in the radial direction, is secured with a backup ring (21) that can be axially slipped on the rotor receptacle (14).

9. The eccentric screw pump according to claim 8, **characterized in that** the backup ring (21) is locked in the axial direction with a locking means (22) such as, e.g., a snap ring or the like.

10. The eccentric screw pump according to one of claims 1-6, **characterized in that** the rotor end (15) features a first securing plate (26) and the second joint part (7b) features a second securing plate (27) in order to realize the axial securing, wherein said securing plates are connected to one another in the axial direction by means of a rotatable securing sleeve (18').

11. The eccentric screw pump according to claim 10, **characterized in that** the eccentric pins (17') and the eccentric recesses (16') are arranged on the securing plates (26, 27).

12. The eccentric screw pump according to claim 10 or 11, **characterized in that** the securing sleeve (18') is prevented from rotating with the aid of a locking means (22').

13. The eccentric screw pump according to one of claims 1-12, **characterized in that** the stator casing (3) is realized in the form of a longitudinally divided casing and features at least two casing segments (13), preferably at least three or at least four casing segments, which can be tensioned relative to one another, wherein the stator casing (3) with its casing segments (13) preferably forms a stator tensioning device, by means of which the stator (1) can be radially tensioned relative to the rotor (2).

## Revendications

1. Pompe à vis sans fin excentrique avec au moins un stator (1) et un rotor (2) logé de manière rotative dans le stator (1), sur une extrémité du stator (1) étant placé un carter d'aspiration (4) et sur l'autre extrémité opposée étant placée une tubulure de raccordement (5),
le stator (1) constitué d'une matière élastomère étant placé à l'intérieur d'une enveloppe du stator (3) et interchangeable séparément de celle-ci,
le stator (1) étant conçu en tant que stator divisé dans la longueur et comportant au moins deux coques partielles (1a, 1 b), par ex. demi-coques de stator,
à l'intérieur du carter d'aspiration (4), le rotor étant raccordé par l'intermédiaire d'un raccord articulé (7) sur une tige d'accouplement (6) ou sur un arbre d'entraînement, le raccord articulé (7) étant constitué d'une première pièce d'articulation (7a), du côté entraînement et d'une deuxième pièce d'articulation (7b) du côté rotor, reliée de manière articulée avec la première pièce d'articulation (7a),
**caractérisé en ce que,** le rotor (2) est raccordé en étant amovible sans démontage du raccord articulé sur la deuxième pièce d'articulation (7b) du raccord articulé (7),
la deuxième pièce d'articulation (7b) comportant au moins un logement de rotor (14) faisant face au rotor et ouvert du côté rotor, dans lequel l'extrémité du rotor (15) est enfichable dans la direction axiale en créant une liaison solidaire en rotation ou inversement, l'extrémité du rotor (15) comportant un logement ouvert du côté articulation, dans lequel l'extrémité articulée de la deuxième pièce d'articulation (7b) est enfichable dans la direction axiale,
l'extrémité du rotor (15) pouvant être fixée dans la direction axiale avec un élément de blocage (18) dans le logement de rotor (14) ou l'extrémité articulée pouvant être fixée dans la direction axiale avec un élément de blocage (18, 18') dans le logement de l'extrémité du rotor.

2. Pompe à vis sans fin excentrique selon la revendication 1, **caractérisée en ce que** dans le logement de rotor (14) de la deuxième pièce d'articulation (7b) ou dans le logement de l'extrémité du rotor (15) est placé au moins un premier élément à complémentarité de forme (16, 16') et **en ce que** l'extrémité du rotor (15) ou l'extrémité articulée de la deuxième pièce d'articulation (7b) comporte au moins un deuxième élément à complémentarité de forme (17, 17').

3. Pompe à vis sans fin excentrique selon la revendication 2, **caractérisée en ce que** les éléments à complémentarité de forme (16, 17) s'engagent l'un dans l'autre en créant un accouplement en griffe.

4. Pompe à vis sans fin excentrique selon la revendication 3, **caractérisée en ce que** dans le logement de rotor (14) de la deuxième pièce d'articulation (7b) ou dans le logement de l'extrémité du rotor (15), un boulon (16) est placé en tant qu'élément à complémentarité de forme (16) et **en ce que** l'extrémité du rotor (15) ou l'extrémité articulée comporte en tant qu'élément à complémentarité de forme (17) un logement fourchu (17), le boulon (16) s'engageant au fur et à mesure du montage dans le logement fourchu (17) en créant un accouplement en griffe.

5. Pompe à vis sans fin excentrique selon la revendication 2, **caractérisée en ce que** les éléments à complémentarité de forme s'engagent l'un dans l'autre en créant une liaison polygonale.

6. Pompe à vis sans fin excentrique selon la revendication 2, **caractérisée en ce qu'**en tant qu'éléments à complémentarité de forme sur l'extrémité du rotor (15) sont prévus un ou plusieurs tenons (17') placés de manière excentrique, débordant en direction axiale et sur la deuxième pièce d'articulation (7b) sont prévus un ou plusieurs évidements (16') correspondants, placés de manière excentrique ou inversement.

7. Pompe à vis sans fin excentrique selon l'une quelconque des revendications 1 à 6, **caractérisée en ce que** l'élément de blocage (18) est conçu en tant que tôle de blocage (18) susceptible d'être montée en direction radiale, qui lorsqu'elle est montée traverse un ajour (19) du logement de rotor (14) ou de sa paroi et qui s'engage dans un évidement (20) du côté de la périphérie extérieure de l'extrémité du rotor.

8. Pompe à vis sans fin excentrique selon la revendication 6 ou 7, **caractérisée en ce que** l'élément de blocage (18) susceptible d'être monté par ex. en direction radiale est bloqué par une bague d'appui (21) emboîtable dans la direction axiale sur le logement de rotor (14).

9. Pompe à vis sans fin excentrique selon la revendication 8, **caractérisée en ce qu'**on arrête la bague d'appui (21) dans la direction axiale avec un moyen d'arrêt (22), par ex. un circlips ou similaire.

10. Pompe à vis sans fin excentrique selon l'une quelconque des revendications 1 à 6, **caractérisée en ce que** pour le blocage axial, l'extrémité du rotor (15) comporte une première plaque de blocage (26) et la deuxième pièce d'articulation (7b) comporte une deuxième plaque de blocage (27) que l'on relie l'une à l'autre en direction axiale par une douille de blocage (18') rotative.

11. Pompe à vis sans fin excentrique selon la revendication 10, **caractérisée en ce que** les tenons (17') excentriques et les évidements (16') excentriques sont placés sur les plaques de blocage (26, 27).

12. Pompe à vis sans fin excentrique selon la revendication 10 ou 11, **caractérisée en ce qu'**on arrête la douille de blocage (18') contre une torsion avec un moyen d'arrêt (22').

13. Pompe à vis sans fin excentrique selon l'une quelconque des revendications 1 à 12, **caractérisée en ce que** l'enveloppe du stator (3) est conçue en tant qu'enveloppe divisée en longueur et comporte au moins deux, de préférence au moins trois, par ex. au moins quatre segments d'enveloppe (13) pouvant être précontraints l'un contre l'autre, l'enveloppe du stator (3) formant avec ses segments d'enveloppe (13) de préférence un dispositif de serrage du stator, à l'aide duquel le stator (1) peut être serré dans la direction radiale contre le rotor (2).
